# EUROPEAN PATENT SPECIFICATION

(11) **EP 3 214 239 B1**
(45) Date of publication and mention of the grant of the patent: **08.04.2020**
(21) Application number: 15855390.9
(22) Date of filing: 31.07.2015
(51) Int. Cl.: E05B 49/00, E05B 9/04, E05B 47/06, E05C 3/04, E05B 11/00, E05B 47/00

(54) **ELECTRONIC LOCK DEVICE**
ELEKTRONISCHE VERRIEGELUNGSVORRICHTUNG
DISPOSITIF DE VERROUILLAGE ÉLECTRONIQUE

(30) Priority: 29.10.2014 KR 20140148324
(43) Date of publication of application: 06.09.2017
(73) Proprietor: Kim, Bum Soo, Gyeonggi-do 472-769 (KR)
(72) Inventor: Kim, Bum Soo, Gyeonggi-do 472-769 (KR)
(74) Representative: Viering, Jentschura & Partner mbB Patent- und Rechtsanwälte
(86) International application number: PCT/KR2015/008073
(87) International publication number: WO 2016/068459

(56) References cited:
- FR-A1- 2 715 183
- JP-B2- 4 188 691
- KR-A- 20060 027 757
- KR-B1- 100 732 879
- KR-B1- 101 016 903
- KR-B1- 101 016 903
- KR-B1- 101 237 738
- KR-B1- 101 237 738
- US-A- 4 789 859
- US-A1- 2009 108 990
- US-B1- 6 794 988

## Description

### [Technical Field]

The present invention relates to an electronic locking device.

### [Background Art]

Generally, a locking device is installed at drawers, furniture and the like of home, a public building, and various storing instruments, gates, lockers, facilities and the like of a commercial building to establish security.

The locking device for such security is classified into a mechanical locking device and an electronic locking device. In the case of the mechanical locking device, there are problems with a security issue by means of a master key and with a replacement of a locking device when a key is lost.

To address these problems of the mechanical locking device, technology for an electronic locking device using an electronic key has been developed.

As an example of such an electronic locking device, 'a cylinder-type electronic locking device' is disclosed in Korean Registered Patent No. 10-1016903.

The cylinder-type electronic locking device disclosed, however, is not provided with a separate fixing structure between a key insertion hole of an electronic key and an insertion portion of a locking device when the electronic key is inserted into the locking device to be operated, such that there is a problem in which the electronic key is escaped from the locking device to be lost, which is caused when a door is opened or a closed by a user while the user inserts the electronic key into the locking device.

US 4 789 859 discloses an electronic locking device, where a lockhead fixedly supports an electronic key.

### [Disclosure]

### [Technical Problem]

Therefore, the present invention is provided to form a structure capable of supporting and fixing a key head of an electronic key at a lock head of a cylinder plug, thereby preventing the electronic key not only from being easily escaped from the cylinder plug but also from being lost.

The object of the present invention is not limited to the described above, and other objects not described may be apparently understood from the following description by those skilled in the art.

### [Technical Solution]

To achieve the object described above, the present invention provides an electronic locking device including a cylinder housing configured to form an external appearance, and a cylinder plug arranged inside the cylinder housing, installed to be rotatable at an original position, and locked or unlocked in the cylinder housing, wherein the cylinder plug includes a key contact point pin into which a key head of an electronic key is attachably and detachably inserted and configured to come in contact with a terminal of the key head, and a lock head at which a second supporter corresponding to a first supporter formed at the key head is formed to fixedly support the electronic key, a controller electrically connected to the key contact point pin and configured to receive an electric power and authentication data from the electronic key; a switcher configured to come in contact with a switch provided at the controller according to a rotation of the cylinder plug to transmit a contact signal to the controller; a driver configured to receive a control signal output from the controller in response to the contact signal to rotate in a forward direction or a reverse direction; and a lock pin configured to be inserted into or withdrawn from a fixing hole of the cylinder housing according to an activation of the driver to control a rotation and a non-rotation of the cylinder plug, and wherein the switcher includes: a head portion inserted into and arranged at an insertion hole formed at the cylinder housing; an extended leg portion formed to extend from the head portion so as to come in contact with the switch when the head portion is pressed according to a rotation of the cylinder plug; a support leg portion integrally formed with the extended leg portion and the head portion to one side or both sides of the extended leg portion; and an elastic support member configured to have one end coupled to the support leg portion and the other end supported by an inward side of the cylinder plug.

### [Advantageous Effects]

In accordance with one embodiment of the present invention, a structure capable of supporting and fixing the key head of the electronic key is formed at the lock head of the cylinder plug such that it may prevent the electronic key not only from being easily escaped from the cylinder plug but also from being lost.

### [Description of Drawings]

FIG. 1 is a perspective view illustrating a coupled status of an electronic locking device and an electronic key according to one embodiment of the present invention.
FIG. 2 is a perspective view illustrating a separated status of the electronic locking device and the electronic key according to one embodiment of the present invention.
FIG. 3 is a cross-sectional view of a part of FIGS. 1 and 2.
FIG. 4 is an exploded perspective view illustrating a part of the electronic locking device according to one embodiment of the present invention.
FIG. 5 is a partially cut-away perspective view illustrating a part of the electronic locking device according to one embodiment of the present invention.
FIG. 6 is a view illustrating a direction change rotation ring of the electronic locking device according to one embodiment of the present invention.
FIG. 7 is a cross-sectional view taken along line A-A' of the electronic locking device according to one embodiment of the present invention.

*** Description of Major Reference Numerals in the Drawings ***

| | | | |
|---|---|---|---|
| 101: | Cylinder Housing | 103: | Electronic Key |
| 105: | Key Head | 107: | Lock Head |
| 109: | Fixing Hole | 111: | Lock Pin |
| 113: | Latch Bolt | 201: | Key Contact Point Pin |
| 203: | First Supporter | 205: | Second Supporter |
| 207: | Key Insertion Hole | 301: | Cylinder Plug |
| 303: | Head | 305: | Guide Shaft |
| 307: | Elastic Member | 309: | Controller |
| 311: | Driver | 313: | Direction Change Rotation Ring |
| 315: | Movement Shaft | 401: | Switcher |
| 501: | Switch | 503: | Head Portion |
| 505: | Extended Leg Portion | 507: | Support Leg Portion |
| 509: | Elastic Support Member | 601: | Spiral Recessed Groove |
| 701: | Insertion Hole | 703: | Driving Shaft |
| 705: | Spur Gear | | |

### [Modes of the Invention]

Hereinafter, some embodiments of the present invention will be described in detail with reference to the accompanying illustrative drawings. In giving reference numerals to components of the drawings, it should be noted that the same components have the same reference numerals as possible although being shown in different drawings. Also, in the following description of the present invention, if a detailed description of known functions and configurations is determined to obscure the gist of embodiments of the present invention, the detailed description thereof will be omitted.

Further, in explaining the components of the embodiment of the present invention, a first, a second, A, B, (a), (b), and the like can be used. These terms are intended to distinguish one component from other components, but the nature and the order or sequence of the components is not limited by those terms. When components are disclosed as "connected," "coupled" or "contacted" to other components, the component can be directly connected or contacted to the other components, but it should be understood that another component(s) could be "connected," "coupled" or "contacted" therebetween.

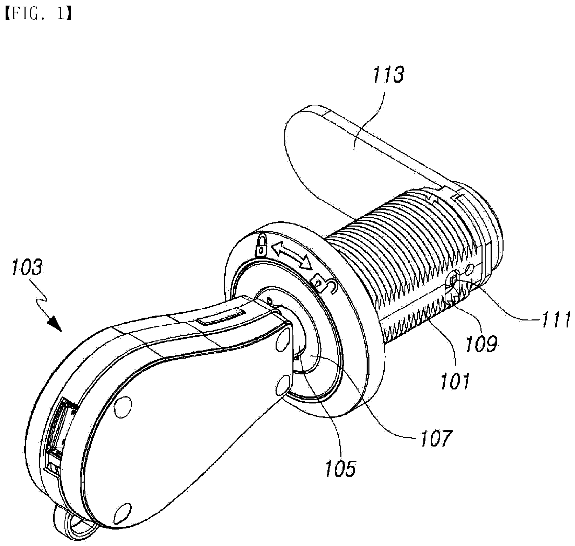

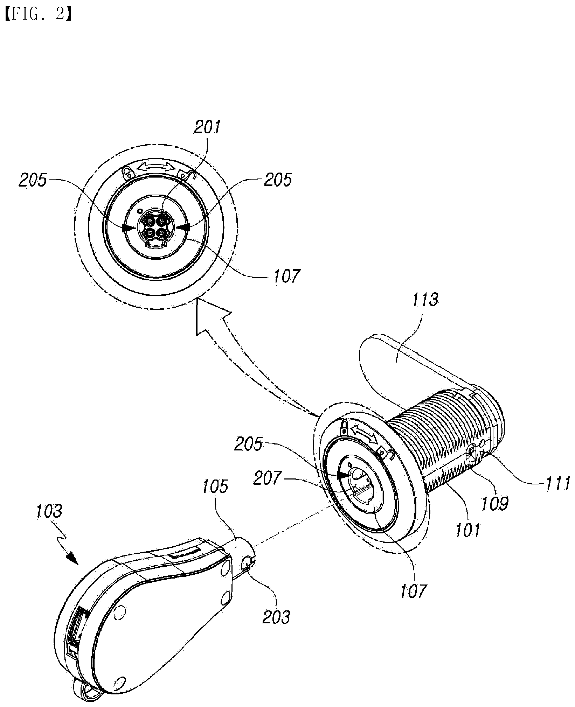

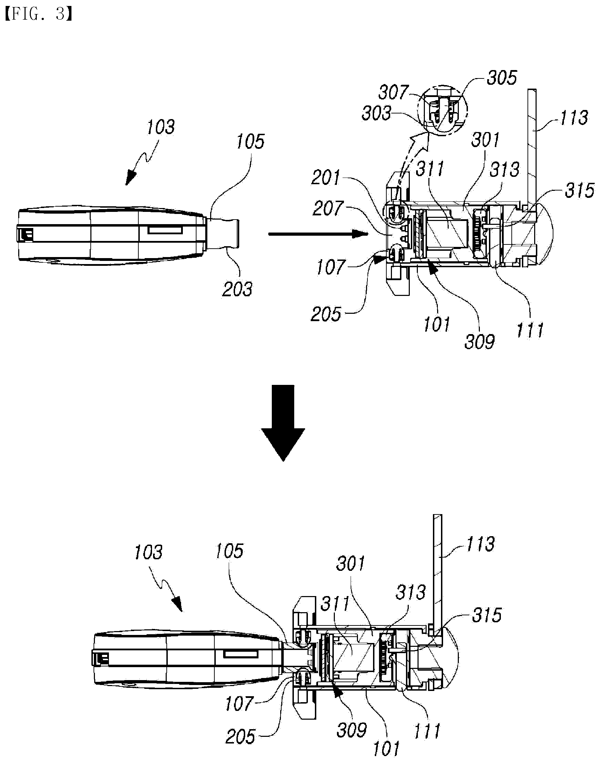

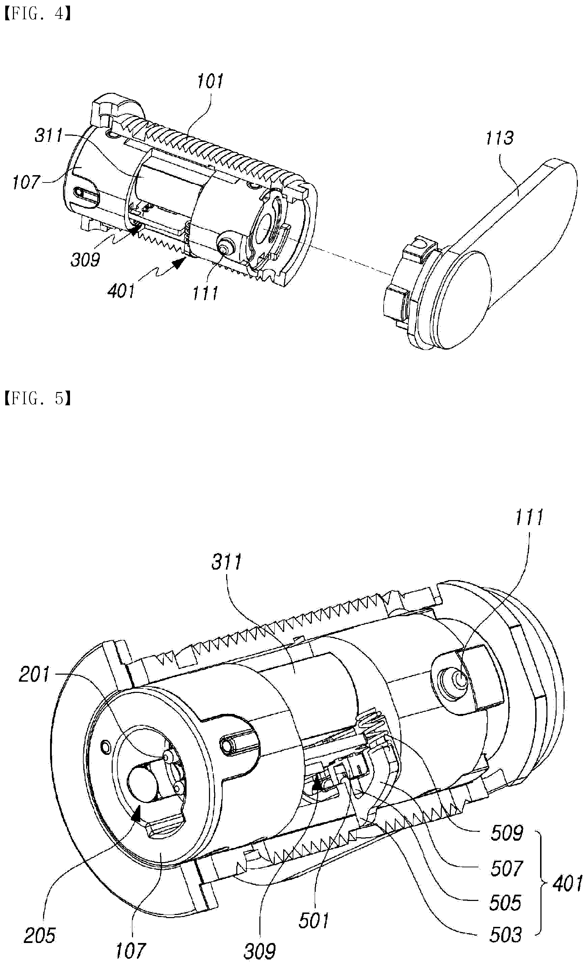

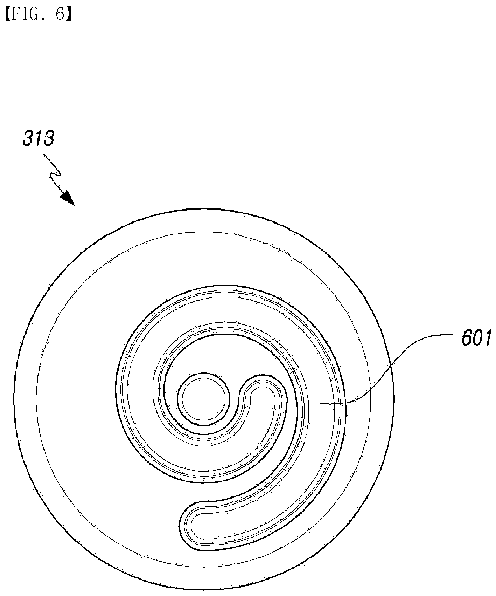

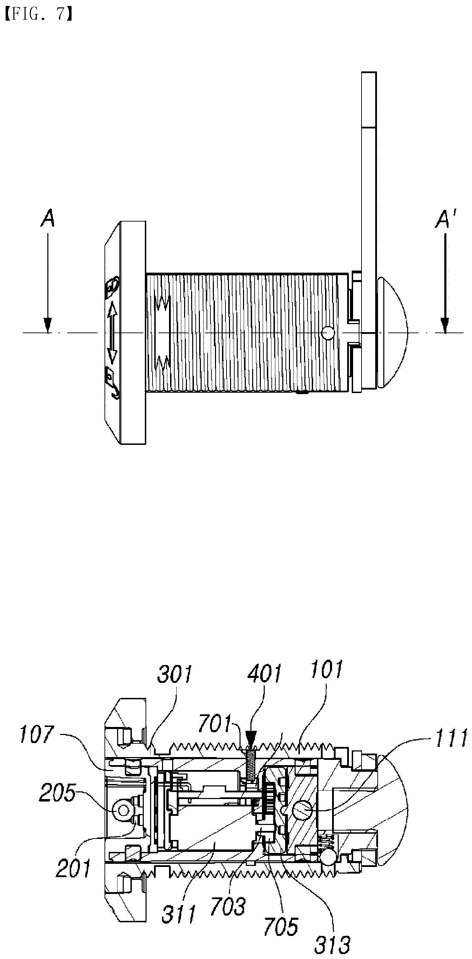

FIG. 1 is a perspective view illustrating a coupled status of an electronic locking device and an electronic key according to one embodiment of the present invention. FIG. 2 is a perspective view illustrating a separated status of the electronic locking device and the electronic key according to one embodiment of the present invention. FIG. 3 is a cross-sectional view of a part of FIGS. 1 and 2. FIG. 4 is an exploded perspective view illustrating a part of the electronic locking device according to one embodiment of the present invention. FIG. 5 is a partially cut-away perspective view illustrating a part of the electronic locking device according to one embodiment of the present invention. FIG. 6 is a view illustrating a direction change rotation ring of the electronic locking device according to one embodiment of the present invention. FIG. 7 is a cross-sectional view taken along line A-A' of the electronic locking device according to one embodiment of the present invention.

As shown in these drawings, an electronic locking device according to one embodiment of the present invention includes a cylinder housing 101 forming an external appearance and a cylinder plug 301, wherein the cylinder plug 301 is located inside the cylinder housing 101, is installed to be rotatable at an original position, and is locked or unlocked in the cylinder housing 101. The cylinder plug 301 includes a key contact point pin 201 into which a key head 105 of an electronic key 103 is attachably and detachably inserted and configured to come in contact with a terminal of the key head 105, and a lock head 107 at which a second supporter 205 corresponding to a first supporter 203 formed at the key head 105 is formed to fixedly support the electronic key 103.

The cylinder housing 101 is provided in, for example, a hollow cylindrical shape to form an external appearance of a locking device. Screw threads are formed on an outer circumferential surface of the cylinder housing 101 to be screw-coupled to a coupling hole formed at a door and the like.

In addition, the cylinder plug 301 is located inside the cylinder housing 101 and is installed to be rotatable at the original position. The cylinder plug 301 is locked or unlocked in the cylinder housing 101, and a latch bolt 113 is coupled to the cylinder plug 301 to be rotated together according to a rotation thereof.

Meanwhile, such a cylinder plug 301 includes the key contact point pin 201 into which the key head 105 of the electronic key 103 is attachably and detachably inserted and configured to come in contact with the terminal of the key head 105, and the lock head 107 at which the second supporter 205 corresponding to the first supporter 203 formed at the key head 105 is formed to fixedly support the electronic key 103.

In other words, a key insertion hole 207 into which the key head 105 of the electronic key 103 is attachably and detachably inserted is formed at the lock head 107 provided at the cylinder plug 301, and a plurality of key contact point pins 201 are provided at a bottom surface (that is, a surface opposite to an opening direction) of the key insertion hole 207 to come in contact with the terminal (not shown) of key head 105 when the key head 105 of the electronic key 103 is inserted into the key insertion hole 207, so that an electric power and authentication data are transmitted from the electronic key 103 to the cylinder plug 301.

Meanwhile, the second supporter 205 is formed at the lock head 107. Such a second supporter 205 corresponds to the first supporter 203 formed at the key head 105 of the electronic key 103 to fixedly support the key head 105 inserted into the key insertion hole 207.

By describing examples of configurations of the first supporter 203 and the second supporter 205 in more detail, the first supporter 203 is formed with a concavely recessed groove at an outer circumferential surface of the key head 105, and the second supporter 205 is provided at an edge surface of the key insertion hole 207 into which the key head 105 is inserted, and corresponds to the first supporter 203 and may be formed of a protrusion to be elastically supported.

That is, the second supporter 205 may be provided to have a structure in which a head 303 exposed to an outside at a circumferential surface of the key insertion hole 207 is formed to be rounded and an elastic member 307 is coupled to an outer circumference side of a guide shaft 305 integrally extended from the head 303.

Consequently, when the key head 105 is inserted into the key insertion hole 207, the head 303 of the second supporter 205 is pressed and then projected by an elastic restoring force of the elastic member 307 to pressurize and support the first supporter 203 of the key head 105, such that the electronic key 103 is not easily escaped from the cylinder plug 301.

Alternatively, formation objects of the first supporter 203 and the second supporter 205 described above may be exchanged with each other. In other words, the first supporter 203 may be provided at the outer circumferential surface of the key head 105 in the form of a protrusion to be elastically supported, and the second supporter 205 may be formed at the edge surface of the key insertion hole 207 into which the key head 105 is inserted in the form of a concavely recessed groove so as to correspond to the first supporter 203.

Meanwhile, the cylinder plug 301 includes a controller 309 electrically connected to the key contact point pin 201 to receive the electric power and the authentication data from the electronic key 103, a switcher 401 configured to come in contact with a switch 501 provided at the controller 309 according to a rotation of the cylinder plug 301 to transmit a contact signal to the controller 309, a driver 311 configured to receive a control signal output from the controller 309 in response to the contact signal to rotate in a forward direction or in a reverse direction, and a lock pin 111 inserted into and withdrawn from a fixing hole 109 of the cylinder housing 101 according to an operation of the driver 311 to control a rotation and a non-rotation of the cylinder plug 301.

The controller 309 is electrically connected to the key contact point pin 201 to receive the electric power and the authentication data from the electronic key 103. In other words, the controller 309 receives the electric power from the electronic key 103 to control a supplying of the electric power to the driver 311 to be described, and also receives the authentication data from the electronic key 103 to compare the received authentication data with prestored user authentication data, thereby determining whether or not the electronic key 103 is an authenticated key.

Additionally, the switch 501 is provided at the controller 309 to transmit a control signal to the driver 311, when coming in contact with the switcher 401 to be described.

With a rotation of the cylinder plug 301, the switcher 401 comes in contact with the switch 501 provided at the controller 309 to transmit a contact signal thereto.

By describing an example of a structure of such a switcher 401 in more detail, the switcher 401 includes a head portion 503 inserted into and arranged at an insertion hole 701 formed at the cylinder housing 101, an extended leg portion 505 extended from the head portion 503 so as to come in contact with the switch 501 when the head portion 503 is pressed according to a rotation of the cylinder plug 301, a support leg portion 507 integrally formed with the extended leg portion 505 and the head portion 503 to one side or both sides of the extended leg portion 505, and an elastic support member 509 having one end coupled to the support leg portion 507 and the other end supported by an inward side of the cylinder plug 301.

As described above, because the switcher 401 coming in contact with the switch 501 provided at the controller 309 to transmit the contact signal thereto is provided, the key head 105 of the electronic key 103 is inserted into the key insertion hole 207 of the lock head 107 and the terminal of the key head 105 comes in contact with the key contact point pin 201 of the lock head 107, so that the authentication data of the electronic key 103 is transmitted to the controller 309. Under the condition that the electronic key 103 is determined as an authenticated key, when the switcher 401 is pressed according to a rotation of the cylinder plug 301 in one direction and the contact signal representing a contact of the switcher 401 and the switch 501 is transmitted to the controller 309, the controller 309 transmits the control signal to and activates the driver 311 to withdraw the lock pin 111 to be described below from the fixing hole 109 of the cylinder housing 101 and to enable the cylinder plug 301 to be rotated, thereby unlocking the electronic locking device.

Thereafter, the driver 311 receives the control signal output from the controller 309 in response to the contact signal generated by the contact of the switch 501 and the switcher 401 to rotate in a forward direction or in a reverse direction, wherein the driver 311 may be provided as an electric motor, for example.

And, the lock pin 111 is inserted into or withdrawn from the fixing hole 109 of the cylinder housing 101 according to an activation of the driver 311 to control a rotation and a non-rotation of the cylinder plug 301.

Meanwhile, by describing an operating structure of the lock pin 111 according to the activation of the driver 311 in more detail, a spur gear 705 is coupled to a driving shaft 703 of the driver 311, and a movement shaft 315 including an internal gear formed at one side thereof so as to be in engagement with the spur gear 705 being off-centered and a direction change rotation ring 313 formed at the other side thereof and on which a spiral recessed groove 601 is formed is provided such that one end of the movement shaft 315 is inserted into the spiral recessed groove 601 and the other end thereof is coupled to the lock pin 111. With such a configuration, when the driving shaft 703 is rotated in a forward direction or in a reverse direction according to the activation of the driver 311, the direction change rotation ring 313 is rotated in one direction or the other direction and thus the movement shaft 315 moves along the spiral recessed groove 601 of the direction change rotation ring 313, such that the lock pin 111 is advanced or moved backward (that is, the lock pin 111 is inserted into or withdrawn from the fixing hole 109 of the cylinder housing 101) to control a rotation or a non-rotation of the cylinder plug 301 inside the cylinder housing 101.

As described above, in accordance with one embodiment of the present invention, a structure capable of supporting and fixing the key head of the electronic key is formed at the lock head of the cylinder plug such that it may prevent the electronic key not only from being easily escaped from the cylinder plug but also from being lost.

Heretofore, even though all components configuring the embodiments of the present invention are described to be combined as one unit or to operate as a combination thereof, the present invention is not limited to these embodiments. That is, within the scope of the present invention, all components may be selectively combined to one or more thereof to operate as a combination.

Also, the terms of "comprise," "configure" and/or "have" specify the presence of stated components, unless there is a clearly different meaning in the present application, but do not preclude the presence thereof and should be construed to further include other components. Unless otherwise defined, all terms including technical or scientific terms used herein have the same meaning as commonly understood by those skilled in the art to which the invention pertains. General terms like those defined in a dictionary shall be construed to have meanings that are consistent in the context of the relevant art, and will not be interpreted as having an idealistic or excessively formalistic meaning unless clearly defined in the present application.

Although the embodiments have been described with reference to a number of illustrative embodiments thereof, it should be understood that numerous other modifications and embodiments can be devised by those skilled in the art that will fall within the scope of the principles of this invention. The embodiments disclosed herein, therefore, are not to be taken in a sense for limiting the technical concept of the present invention but for explanation thereof, and the range of the technical concept is not limited to these embodiments. The scope of the present invention should be construed by the appended claims.

## Claims

1. An electronic locking device comprising:
a cylinder housing (101) configured to form an external appearance; and
a cylinder plug (301) arranged inside the cylinder housing, installed to be rotatable at an original position, and locked or unlocked in the cylinder housing,
wherein the cylinder plug (301) includes:
a key contact point pin (201) into which a key head (105) of an electronic key (103) is attachably and detachably inserted and configured to come in contact with a terminal of the key head (105);
a lock head (107) at which a second supporter (205) corresponding to a first supporter (203) formed at the key head (105) is formed to fixedly support the electronic key (103),
a controller (309) electrically connected to the key contact point pin (201) and configured to receive an electric power and authentication data from the electronic key;
a switcher (401) configured to come in contact with a switch (501) provided at the controller according to a rotation of the cylinder plug (301) to transmit a contact signal to the controller;
a driver (311) configured to receive a control signal output from the controller (309) in response to the contact signal to rotate in a forward direction or a reverse direction; and
a lock pin (111) configured to be inserted into or withdrawn from a fixing hole of the cylinder housing (101) according to an activation of the driver to control a rotation and a non-rotation of the cylinder plug (301), and
wherein the switcher (401) includes:
a head portion (503) inserted into and arranged at an insertion hole (701) formed at the cylinder housing;
an extended leg portion (505) formed to extend from the head portion so as to come in contact with the switch when the head portion is pressed according to a rotation of the cylinder plug (301);
a support leg portion (507) integrally formed with the extended leg portion and the head portion to one side or both sides of the extended leg portion; and
an elastic support member (509) configured to have one end coupled to the support leg portion and the other end supported by an inward side of the cylinder plug (301).

2. The electronic locking device of claim 1, wherein the first supporter (203) is provided at an outer circumferential surface of the key head (105) in the form of a concavely recessed groove, and
the second supporter (205) is provided at an edge surface of a key insertion hole (207) into which the key head (105) is inserted, and corresponds to the first supporter and is provided in the form of a protrusion being elastically supported.

3. The electronic locking device of claim 1, wherein the first supporter (203) is provided at an outer circumferential surface of the key head (105) and formed with a protrusion being elastically supported, and the second supporter (205) is formed at an edge surface of a key insertion hole (207) into which the key head (105) is inserted in the form of a concavely recessed groove so as to correspond to the first supporter.

## Patentansprüche

1. Elektronische Verriegelungsvorrichtung, aufweisend:
ein Zylindergehäuse (101), das konfiguriert ist, um ein äußeres Erscheinungsbild zu bilden, und
einen Zylinderstecker (301), der innerhalb des Zylindergehäuses angeordnet ist, der installiert ist, um in einer ursprünglichen Position rotierbar zu sein, und der in dem Zylindergehäuse verriegelt oder entriegelt ist,
wobei der Zylinderstecker (301) aufweist:
einen Schlüsselkontaktpunktstift (201), in welchen ein Schlüsselkopf (105) eines elektronischen Schlüssels (103) befestigbar und abnehmbar eingesetzt ist und welcher konfiguriert ist, um in Kontakt mit einem Anschluss des Schlüsselkopfs (105) zu kommen,
einen Verriegelkopf (107), an welchem ein zweiter Halter (205), der zu einem ersten Halter (203), der an dem Schlüsselkopf (105) gebildet ist, korrespondiert ausgebildet ist, um den elektronischen Schlüssel (103) fest zu halten,
eine Steuervorrichtung (309), die elektrisch mit dem Schlüsselkontaktpunktstift (201) verbunden ist und die konfiguriert ist, um eine elektrische Energie und Authentifizierungsdaten von dem elektronischen Schlüssel zu empfangen,
einen Schalter (401), der konfiguriert ist, um in Kontakt mit einem Umschalter (501) zu kommen, der an der Steuervorrichtung bereitgestellt ist, gemäß einer Rotation des Zylindersteckers (301), um ein Kontaktsignal an die Steuervorrichtung zu übermitteln,
einen Treiber (311), der konfiguriert ist, um ein Steuersignal, das von der Steuervorrichtung (30) in Antwort auf das Kontaktsignal ausgegeben wird, zu empfangen, um in eine Vorwärtsrichtung oder eine Rückwärtsrichtung zu rotieren, und
einen Sicherungsstift (111), der konfiguriert ist, um in ein Befestigungsloch des Zylindergehäuses (101) eingesetzt oder davon herausgenommen zu sein gemäß einer Aktivierung des Treibers, um eine Rotation und eine Nichtrotation des Zylindersteckers (301) zu steuern, und
wobei der Schalter (401) aufweist:
einen Kopfabschnitt (503), der eingesetzt ist in und angeordnet ist an einem Einsetzloch (701), das an dem Zylindergehäuse ausgebildet ist,
einen langgestreckten Schenkelabschnitt (505), der ausgebildet ist, um sich von dem Kopfabschnitt aus zu erstrecken, um in Kontakt mit dem Umschalter zu kommen, wenn der Kopfabschnitt gedrückt wird, gemäß einer Rotation des Zylindersteckers (301).
einen Halteschenkelabschnitt (507), der integral mit dem langgestreckten Schenkelabschnitt und dem Kopfabschnitt zu einer Seite oder beiden Seiten des langgestreckten Schenkelabschnitts ausgebildet ist, und
ein elastisches Halteelement (509), das konfiguriert ist, um ein Ende mit dem Halteschenkelabschnitt verbunden zu haben und das andere Ende durch eine Innenseite des Zylindersteckers (301) gestützt zu haben.

2. Elektronische Verriegelungsvorrichtung nach Anspruch 1, wobei der erste Halter (203) an einer äußeren Umfangsfläche des Schlüsselkopfs (105) in Form einer konkav vertieften Nut bereitgestellt ist und
der zweite Halter (205) an einer Randfläche des Schlüssel-Einsetzlochs (207) bereitgestellt ist, in welches der Schlüsselkopf (105) eingesetzt ist, und zu dem ersten Halter korrespondiert und bereitgestellt ist in Form eines Vorsprungs, der elastisch gestützt ist.

3. Elektronische Verriegelungsvorrichtung nach Anspruch 1, wobei der erste Halter (203) an einer äußeren Umfangsfläche des Schlüsselkopfs (105) bereitgestellt ist und mit einem Vorsprung ausgebildet ist, der elastisch gestützt ist, und der zweite Halter an einer Randfläche eines Schlüssel-Einsetzlochs (207) ausgebildet ist, in welches der Schlüsselkopf (105) in Form einer konkav vertieften Nut eingesetzt ist, um zu dem ersten Halter zu korrespondieren.

## Revendications

1. Dispositif de verrouillage électronique comprenant :
un carter de cylindre (101) configuré pour former une apparence externe ; et
une fiche de cylindre (301) prévue à l'intérieur du carter de cylindre, installée pour pouvoir être tournée dans une position d'origine, et verrouillée ou déverrouillée dans le carter de cylindre,
dans lequel la fiche de cylindre (301) comprend :
une fiche de point de contact de clé (201) dans laquelle une tête de clé (105) d'une clé électronique (103) est insérée de manière fixe et amovible, et configurée pour entrer en contact avec une borne de la tête de clé (105) ;
une tête de verrouillage (107) au niveau de laquelle un second support (205) qui correspond à un premier support (203) formé au niveau de la tête de clé (105) est formé afin de supporter de manière fixe la clé électronique (103),
un contrôleur (309) relié électriquement à la fiche de point de contact de clé (201) et configuré pour recevoir une énergie électrique et des données d'authentification de la part de la clé électronique ;
un commutateur (401) configuré pour entrer en contact avec un interrupteur (501) prévu au niveau du contrôleur selon une rotation de la fiche de cylindre (301) afin de transmettre un signal de contact au contrôleur ;
un entraînement (311) configuré pour recevoir un signal de commande délivré par le contrôleur (309) en réponse au signal de contact de façon à tourner vers l'avant ou dans une direction inverse ; et
une clavette de sécurité (111) configurée pour être insérée dans ou retirée d'un orifice de fixation du carter de cylindre (101) selon une activation de l'entraînement de façon à contrôler une rotation et une non-rotation de la fiche de cylindre (301), et
dans lequel le commutateur (401) comprend :
une partie de tête (503) insérée dans et prévue au niveau d'un orifice d'insertion (701) formé au niveau du carter de cylindre ;
une partie de patte étendue (505) formée afin de s'étendre depuis la partie de tête de façon à entrer en contact avec l'interrupteur lorsque la partie de tête est enfoncée selon une rotation de la fiche de cylindre (301) ;
une partie de patte de support (507) intégralement formée avec la partie de patte étendue et la partie de tête vers un côté ou les deux côtés de la partie de patte étendue ; et
un élément de support élastique (509) configuré pour avoir une extrémité reliée à la partie de patte de support et l'autre extrémité supportée par un côté intérieur de la fiche de cylindre (301).

2. Dispositif de verrouillage électronique selon la revendication 1, dans lequel le premier support (203) est prévu au niveau d'une surface circonférentielle externe de la tête de clé (105) sous la forme d'une rainure renfoncée de manière concave, et
le second support (205) est prévu au niveau d'une surface de bord d'un orifice d'insertion de clé (207) dans lequel la tête de clé (105) est insérée, et correspond au premier support et est prévu sous la forme d'une saillie supportée élastiquement.

3. Dispositif de verrouillage électronique selon la revendication 1, dans lequel le premier support (203) est prévu au niveau d'une surface circonférentielle externe de la tête de clé (105) et est formé avec une saillie qui est supportée élastiquement, et le second support (205) est formé au niveau d'une surface de bord de l'orifice d'insertion de clé (207) dans lequel la tête de clé (105) est insérée sous la forme d'une rainure renfoncée de manière concave de façon à correspondre au premier support.
